# FASCICULE DE BREVET EUROPEEN

(11) **EP 3 123 595 B1**
(45) Date de publication et mention de la délivrance du brevet: **22.02.2023**
(21) Numéro de dépôt: 15713973.4
(22) Date de dépôt: 02.03.2015
(51) Int. Cl.: H02K 1/24, H02K 21/04, H02K 15/02

(54) **ROUE POLAIRE FORGÉE POUR ALTERNATEUR DE VÉHICULE AUTOMOBILE MUNI D'AIMANTS PERMANENTS INTERPOLAIRES**
GESCHMIEDETES POLRAD FÜR EINE KRAFTFAHRZEUGLICHTMASCHINE MIT INTERPOLAREN PERMANENTMAGNETEN
FORGED POLE WHEEL FOR A MOTOR VEHICLE ALTERNATOR PROVIDED WITH INTERPOLAR PERMANENT MAGNETS

(30) Priorité: 25.03.2014 FR 1452499
(43) Date de publication de la demande: 01.02.2017
(73) Titulaire: Valeo Equipements Electriques Moteur, 94046 Créteil Cedex (FR)
(72) Inventeur: BOCQUEL, Michel, 14390 Cabourg (FR); DELIANNE, Henri, 62630 Maresville (FR); BILTERYST, Pierre-Yves, 62170 Brimeux (FR); RIBOT, Hervé, 62250 Saint Inglevert (FR)
(74) Mandataire: Valeo Powertrain Systems
(86) Numéro de dépôt international: PCT/FR2015/050504
(87) Numéro de publication internationale: WO 2015/145009

(56) Documents cités:
- FR-A1- 2 939 252
- JP-A- 2010 252 560
- US-A1- 2002 138 968

## Description

De manière générale, l'invention concerne un rotor de machine électrique tournante de type Lundell, , telle qu'un alternateur ou un alterno-démarreur de véhicule automobile, comprenant des roues polaires forgées. Plus particulièrement, l'invention concerne un rotor équipé d'aimants permanents interpolaires.

Il est connu dans la fabrication des roues polaires pour les alternateurs à griffes de faire appel à des opérations de moulage tel que décrit dans le document FR2939252. Il est également connu de faire appel à des opérations de forgeage comme dans le document US2002138968.

Les rotors équipés d'aimants permanents interpolaires demandent la réalisation de rainures de logement d'aimant et de lèvres d'aimant dans les dents des roues polaires. Les lèvres d'aimant assurent le maintien en place des aimants permanents qui sont soumis aux effets de la force centrifuge lorsque le rotor est en rotation.

Il est connu de réaliser les rainures de logement d'aimant et les lèvres d'aimant par une opération d'usinage intervenant après l'obtention de la roue polaire forgée. Dans le processus industriel de fabrication des roues polaires, cette opération d'usinage présente l'inconvénient d'accroître la durée de fabrication et le coût de la pièce.

Dans US7,676,902B2, il est décrit un procédé de fabrication d'une roue polaire dans lequel l'opération d'usinage des rainures de logement d'aimant est éliminée. La roue polaire est obtenue en ne faisant appel qu'à des opérations de forgeage. Les rainures de logement d'aimant et les lèvres d'aimant sont préformées en forgeage à chaud. Des outils de formage à froid sont ensuite utilisés pour achever la réalisation des rainures et lèvres, ainsi que des chanfreins prévus dans les dents de la roue polaire. Ces outils de formage à froid sont actionnés radialement, c'est-à-dire, suivant le rayon de la roue polaire.

La présente invention a pour objet de fournir un rotor comprenant des roues polaires dont la conception autorise un procédé de forgeage des rainures de logement d'aimant et des lèvres d'aimant autre que le procédé connu, décrit ci-dessus, de la technique antérieure.

Le rotor de machine électrique de type Lundell selon l'invention comprend deux roues polaires obtenues entièrement par forgeage et comprend un noyau central , une pluralité de dents polaires réparties de manière régulière à la circonférence de la roue polaire, les dents polaires s'étendant de manière sensiblement parallèle à un axe central de la roue polaire et comprenant des rainures de logement d'aimant et de lèvres d'aimant, les deux roues polaires étant montées sur un arbre de sorte que les dents respectives des roues polaires sont imbriquées et forment une alternance de pôles magnétiques sud et nord, des aimants interpolaires étant logés dans les espaces existant entre les dents N et S des roues polaires, les rainures de logement d'aimant et de lèvres d'aimant étant adaptées pour le montage des aimants interpolaires dans les espaces entre les dents N et S et pour les maintenir en position lorsque le rotor est tournant et que s'exercent les effets de la force centrifuge, et une partie annulaire formant plateau et s'étendant entre le noyau central et des parties formant bases des dents polaires. Conformément à l'invention, la roue polaire comprend une pluralité de réservoirs aménagés dans les parties formant bases des dents polaires.

Ces réservoirs localisés à la base des dents offrent un espace pour la matière refoulée lors de frappes de forgeage à froid et rendent possible la fabrication complète de la pièce par forgeage, avec forgeage à froid dans la direction axiale.

Selon une caractéristique particulière de l'invention, les réservoirs sont au nombre de deux pour chaque dent polaire.

Selon une autre caractéristique particulière, les réservoirs sont situés de part et d'autre des dents polaires.

Selon encore une autre caractéristique particulière, les réservoirs sont réalisés en contrebas d'une surface intérieure de la partie annulaire formant plateau.

Selon encore une autre caractéristique particulière de l'invention, une forme à la base des lèvres d'aimant, à proximité d'une intersection entre deux plans perpendiculaires, est comprise dans un carrée (SQ) de 3 mm x 3 mm centré sur ladite intersection.

Selon encore une autre caractéristique particulière, la forme à la base des lèvres d'aimant a un rayon compris entre 0,01 et 4 mm.

Selon encore une autre caractéristique particulière, sur toute la longueur des dents polaires, des parties formant bases à des parties formant pointes de celles-ci, un rapport e/E entre une épaisseur E des dents polaires et une épaisseur e des lèvres d'aimant est compris entre e/R = 0,5 et e/R = 1.

D'autres caractéristiques et avantages de l'invention ressortiront à la lecture de la description qui suit d'un mode de réalisation de celle-ci, illustré par :
- la Fig.1 qui est une vue montrant un rotor à griffes d'un alternateur de véhicule automobile ;
- la Fig.2 qui est une vue en perspective d'une roue polaire équipée d'aimants permanents, incluse dans le rotor de la Fig.1 ;
- les Figs.3a à 3d qui montrent la formation progressive d'une roue polaire de base dans une étape de forgeage à chaud ;
- la Fig.3e qui montre une section de dent de la roue polaire de base de la Fig.3d obtenue à l'issue de l'étape de forgeage à chaud ;
- les Figs.4a à 4c qui concernent une étape de forgeage à froid :

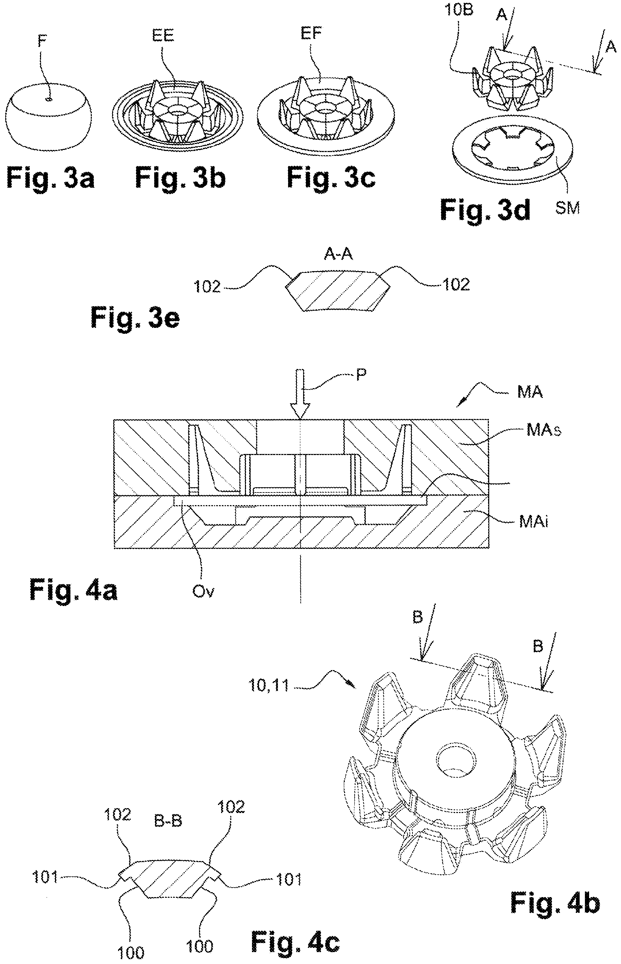

   - la Fig.4a étant une vue en coupe d'une matrice utilisée dans l'étape de forgeage à froid ;
   - la Fig.4b étant une vue en perspective de la roue polaire selon l'invention obtenue à l'issue de l'étape de forgeage à froid ;
   - la Fig.4c montrant une section de dent de la roue polaire de la Fig.4b ; et

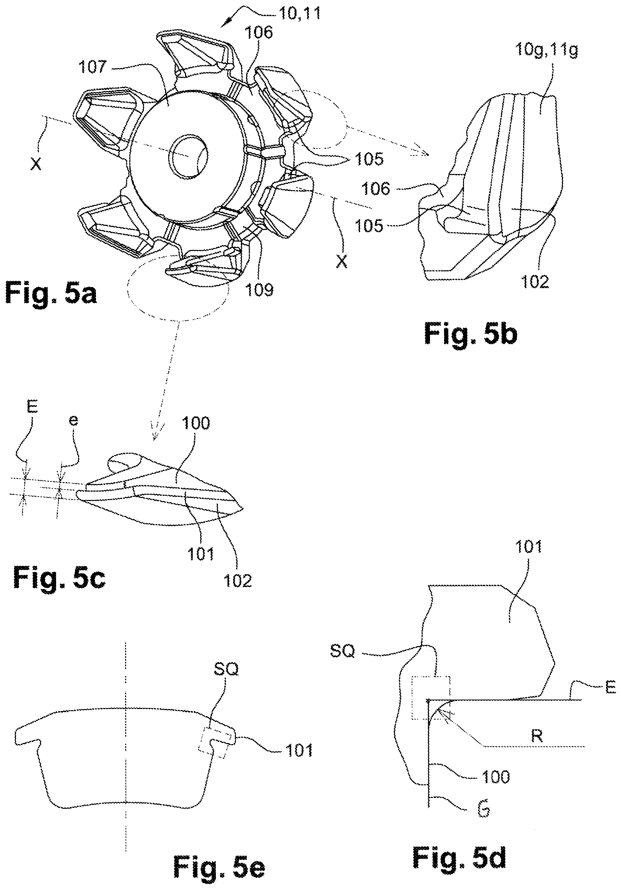

- les Figs.5a à 5d qui montrent la roue polaire selon l'invention ainsi que des détails de réalisation de celle-ci :
   - la Fig.5a étant une représentation agrandie de la roue polaire selon l'invention ;
   - la Fig.5b étant une vue partielle en perspective montrant un réservoir prévu à la base des dents polaires de la roue polaire selon l'invention ;
   - la Fig.5c étant une vue partielle en perspective montrant une configuration en bout de dent de la rainure de logement d'aimant et de la lèvre d'aimant ; et
   - la Fig.5d étant une vue en coupe schématique montrant un rayon intérieur prévue dans la rainure de logement d'aimant, à la base de la lèvre d'aimant.

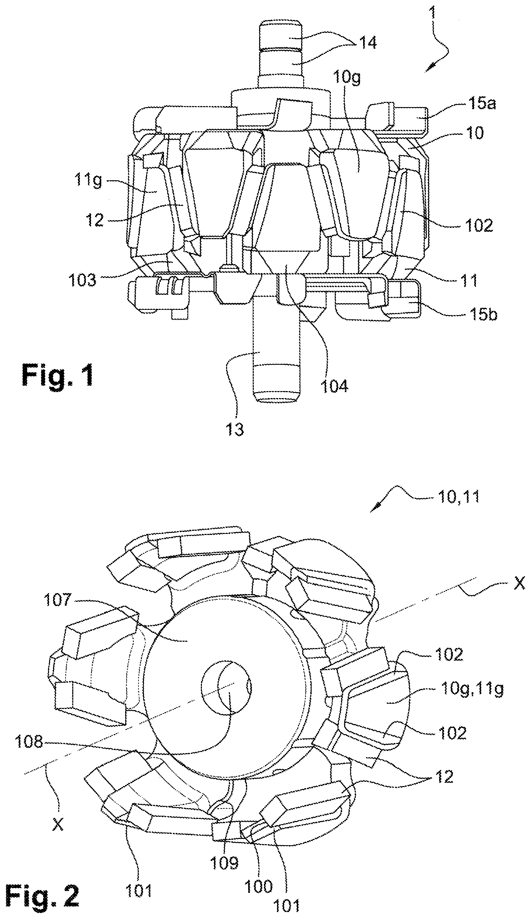

Le rotor et les roues polaires d'une machine électrique tournante de type Lundell, dite également machine à griffes, sont maintenant décrits en référence notamment aux Figs. 1 et 2.

Comme montré à la Fig.1, le rotor 1 d'une machine électrique tournante de type Lundell comprend essentiellement deux roues polaires 10 et 11, des aimants permanents interpolaires 12, une bobine d'excitation (non apparente), un arbre 13, un collecteur 14, et deux ventilateurs 15a, 15b servant au refroidissement de la machine.

Les roues polaires 10, 11 sont montées sur l'arbre 13 de telle manière que leurs dents respectives 10g, 11g sont imbriquées et forment une alternance de pôles magnétiques sud (S) et nord (N). Ces pôles magnétiques S et N sont produits par l'alimentation en courant électrique de la bobine d'excitation insérée dans un noyau central 107 (Fig.2) des roues polaires 10 et 11. La bobine d'excitation est alimentée à travers le collecteur 14. Une partie formant plateau 109 (Fig.2) est présente entre le noyau central 107 et la base des griffes 10, 11, et autorise un espace destiné à être occupé par la bobine d'excitation.

Les aimants interpolaires 12 sont logés dans les espaces existant entres les dents N et S des roues polaires 10, 11. Dans la forme de réalisation particulière du rotor 1 représentée à la Fig.1, l'ensemble des espaces interdents sont occupés par les aimants 12. Dans d'autres formes de réalisation, les aimants 12 n'occupent qu'une partie des espaces interdents disponibles.

A la Fig.2, la roue polaire 10, 11 est montrée avec les aimants permanents 12. Des rainures de logement d'aimant 100 et lèvres 101 sont prévues dans les dents 10g, 11g de la roue polaire afin de permettre le montage des aimants 12 dans les espaces interdents et de les maintenir en position lorsque le rotor 1 est tournant et que s'exercent les effets de la force centrifuge.

Des chanfreins magnétiques 102, aérauliques 103 et d'équilibrage 104 sont également prévus dans les dents 10g, 11g. Les chanfreins magnétiques 102 sont aménagés de part et d'autres des bords longitudinaux de la dent 10g, 11g, comme montré à la Fig.2. Les chanfreins aérauliques 103 et d'équilibrage 104 sont visibles à la Fig.1.

En référence plus particulièrement aux Figs.3a à 3e et 4a à 4c, il est maintenant décrit le procédé de forgeage mis en oeuvre pour la fabrication de la roue polaire selon l'invention.

Le procédé de forgeage comprend deux étapes principales, à savoir, une étape de forgeage à chaud suivie d'une étape de forgeage à froid.

L'étape de forgeage à chaud permet d'obtenir à partir d'un lopin de fer préalablement écrasé F (Fig.3a) une roue polaire de base 10B (Fig.3d) dans laquelle ont été formés les chanfreins 102, 103 et 104. Aucune préforme de rainure et lèvre d'aimant n'est réalisée au cours de cette étape EC.

De manière classique, l'étape de forgeage à chaud comprend une opération de réalisation d'une ébauche EE (Fig.3b), une opération de finition EF (Fig.3c) et une opération de découpe des surplus de matière SM (Fig.3d) aux contours de la roue polaire de base 10B.

A l'issue de l'étape de forgeage à chaud, les dents 10g, 11g, sont formées avec les chanfreins 102, 103 et 104. Une coupe de la dent 10g, 11g, selon un axe de coupe AA (Fig.3d), est montrée à la Fig.3e.

L'étape de forgeage à froid a pour finalité de réaliser les rainures de logement d'aimant 100 et lèvres 101 pour les aimants 12. Pour cela, il est réalisé des rainures sous les dents 10g, 11g, au niveau des bords longitudinaux de celles-ci. Ces rainures sont réalisées par refoulement de la matière, par deux opérations successives de frappe à froid, en utilisant une matrice MA montrée à la Fig.4a.

Comme montré à la Fig.4a, la matrice MA est formée d'une matrice inférieure MAi et d'une matrice supérieure MAs.

La roue polaire de base 10B est placée dans une forme correspondante de la matrice inférieure MAi, avec les dents orientées vers le haut.

La matrice supérieure MAs comporte la forme définitive de la dent 10g, 11g, avec les rainures de logement d'aimant 100 et les lèvres 101.

Une ouverture Ov au plan de joint entre les matrices inférieure MAi et supérieure MAs est prévue pour la bavure. L'ouverture Ov a une dimension comprise entre 0,1.L et L, L étant l'épaisseur du plateau 109 (Fig.5a). Typiquement, L'ouverture Ov a une dimension comprise entre 0,1 mm à 6 mm selon les applications.

Une poussée verticale P est exercée sur la matrice MA, jusqu'au contact au plan de joint entre la matrice supérieure MAs et la matrice inférieure MAi. La matière est repoussée dans la préforme prévue à cet effet dans la matrice. Un contre-appui de blocage est assuré sur le diamètre fer de la pièce et/ou les chanfreins magnétiques 102, aérauliques 103 et d'équilibrage 104. Les chanfreins 102, 103 et 104 sont, selon les applications, conformés et/ou maintenus.

L'opération de matriçage à froid est réalisée en deux frappes successives, avec des pressions égales ou différentes, selon les applications, typiquement entre 150 à 1500 Tonnes.

Une opération de découpe des surplus de matière aux contours de la roue polaire 10, 11 est réalisée après l'opération de matriçage à froid. La fabrication de la roue polaire 10,11 est alors terminée et celle-ci comportent les rainures de logement d'aimant 100 et lèvres 101, ainsi que les chanfreins 102, 103 et 104 obtenus préalablement dans l'étape de forgeage à chaud. Une coupe de la dent 10g, 11g, selon un axe de coupe BB (Fig.4b), est montrée à la Fig.4c.

Des détails de réalisation de la roue polaire 10, 11 sont maintenant décrits en référence aux Figs.5a à 5d.

Comme montré aux Figs.5a et 5b, des réservoirs 105 sont prévus à la base de chacune des dents 10g, 11g, de la roue polaire 10, 11. Ces réservoirs 105 sont au nombre de deux pour chaque dent 10g, 11g, et sont situés de part et d'autre de celle-ci. On notera à la Fig.5b que les réservoirs 105 sont réalisés en contrebas d'une surface intérieure 106, sensiblement annulaire, de la partie formant plateau 109 de la roue polaire 10, 11. La partie formant plateau 109 est comprise entre la base des dents 10g, 11g, et le noyau central 107 de la roue polaire 10, 11.

Ces réservoirs 105 localisés à la base des dents 10g, 11g sont nécessaires dans la roue polaire selon l'invention car ils autorisent la fabrication de celle-ci par la mise en oeuvre du procédé de forgeage tel qu'il vient d'être décrit ci-dessus. En effet, les réservoirs 105 offrent un espace pour la matière refoulée lors des deux frappes successives de l'étape de forgeage à froid et rendent donc possible la fabrication complète de la pièce par forgeage, avec forgeage à froid dans la direction axiale.

Des essais ont été réalisés par l'entité inventive et ont mis en évidence l'intérêt de certaines caractéristiques particulières détaillées ci-dessous de la roue polaire 10, 11 selon l'invention, notamment pour la tenue mécanique des lèvres 101 à la centrifugation.

En référence à la Fig.5d, un rayon R à la base de la lèvre 101 sera de préférence compris entre R = 0,01 mm et R = 4 mm, selon les applications. On notera que la forme à la base de la lèvre 101 sera de préférence comprise dans un carré SQ de 3 mm x 3 mm environ qui est centré sur l'intersection des plans perpendiculaires E et G.

En référence à la Fig.5e, on notera également que d'autres formes, avec rayon ou non, pourront être choisies à la base de la lèvre 101, à proximité de l'intersection entre les plans E et G. Conformément à l'invention, ces autres formes resteront comprises dans le carré SQ.

En référence à la Fig.5c, sur toute la longueur de la dent 10g, 11g, de sa base à sa pointe montrée à la Fig.5c, un rapport e/E entre l'épaisseur E de la dent 10g, 11g et l'épaisseur e de la lèvre 101 doit être compris entre e/R = 0,5 et e/R = 1.

## Revendications

1. Rotor (1) d'une machine électrique tournante de type Lundell comprenant deux roues polaires (10, 11), chaque roue polaire (10, 11) étant obtenue entièrement par forgeage et comprenant un noyau central (107), une pluralité de dents polaires (10g, 11g) réparties de manière régulière à la circonférence de la roue polaire (10, 11),
lesdites dents polaires (10g, 11g) s'étendant de manière sensiblement parallèle à un axe central (X) de la roue polaire (10, 11) et comprenant des rainures de logement d'aimant (100) et de lèvres d'aimant (101) ,
les deux roues polaires étant montées sur un arbre (13) de sorte que les dents respectives des roues polaires (10, 11) sont imbriquées et forment une alternance de pôles magnétiques sud (S) et nord (N), des aimants interpolaires (12) étant logés dans les espaces existant entre les dents N et S des roues polaires (10, 11),
les rainures de logement d'aimant (100) et de lèvres d'aimant (101) étant adaptées pour le montage des aimants interpolaires (12) dans les espaces entre les dents N et S et pour les maintenir en position lorsque le rotor est tournant et que s'exercent les effets de la force centrifuge, et une partie annulaire (106) formant plateau et s'étendant entre le noyau central (107) et des parties formant bases desdites dents polaires (10g, 11g), **caractérisée en ce qu'**elle comprend une pluralité de réservoirs (105) aménagés dans lesdites parties formant bases des dents polaires.

2. Rotor selon la revendication 1, **caractérisé en ce que** lesdits réservoirs (105) sont au nombre de deux pour chaque dent polaire (10g, 11g).

3. Rotor selon la revendication 1 ou 2, **caractérisé en ce que** lesdits réservoirs (105) sont situés de part et d'autre desdites dents polaires (10g, 11g).

4. Rotor selon l'une quelconque des revendications 1 à 3, **caractérisé en ce que** lesdits réservoirs (105) sont réalisés en contrebas d'une surface intérieure (106) de ladite partie annulaire formant plateau.

5. Rotor selon l'une quelconque des revendications 1 à 4, **caractérisé en ce qu'**une forme à la base des lèvres d'aimant (101), à proximité d'une intersection entre deux plans perpendiculaires (E, G), est comprise dans un carrée (SQ) de 3 mm x 3 mm centré sur ladite intersection.

6. Rotor selon l'une quelconque des revendications 1 à 4, **caractérisé en ce qu'**une forme à la base des lèvres d'aimant (101), à proximité d'une intersection entre deux plans perpendiculaires (E, G), a un rayon (R) compris entre 0,01 et 4 mm.

7. Rotor selon l'une quelconque des revendications 1 à 6, **caractérisé en ce que** sur toute la longueur desdites dents polaires (10g, 11g), desdites parties formant bases à des parties formant pointes de celles-ci, un rapport e/E entre une épaisseur E desdites dents polaires (10g, 11g) et une épaisseur e desdites lèvres d'aimant (101) est compris entre e/R = 0,5 et e/R = 1.

## Patentansprüche

1. Rotor (1) einer drehenden elektrischen Maschine vom Lundell-Typ umfassend zwei Polräder (10, 11), wobei jedes Polrad (10, 11) vollständig durch Schmieden hergestellt ist und einen Mittelkern (107), eine Mehrzahl von Polzähnen (10g, 11g), die regelmäßig am Umfang des Polrads (10, 11) verteilt sind, umfasst, wobei sich die Polräder (10g, 11g) im Wesentlichen parallel zu einer Mittelachse (X) des Polrads (10, 11) erstrecken und Magnetaufnahmenuten (100) und Magnetlippen (101) umfassen,
wobei die zwei Polräder an einer Welle (13) so angebracht sind, dass die jeweiligen Zähne der Polräder (10, 11) ineinandergreifen und einen Wechsel von magnetischen Süd-(S) und Nordpolen (N) bilden, wobei Zwischenpolmagnete (12) in den Räumen aufgenommen sind, die zwischen den N- und S-Zähnen der Polräder (10, 11) vorhanden sind,
wobei die Magnetaufnahmenuten (100) und Magnetlippen (101) für die Montage der Zwischenpolmagneten (12) in den Räumen zwischen den N- und S-Zähnen und zum Inpositionhalten dieser, wenn sich der Rotor dreht und die Fliehkraft wirkt, geeignet sind, und einen ringförmigen Abschnitt (106), der eine Platte bildet und sich zwischen dem Mittelkern (107) und Abschnitten, die Basen der Polzähne (10g, 11g) bilden, erstreckt, **dadurch gekennzeichnet, dass** er eine Mehrzahl von Becken (105) umfasst, die in den Abschnitten ausgebildet sind, die Basen der Polzähne bilden.

2. Rotor nach Anspruch 1, **dadurch gekennzeichnet, dass** die Becken (105) für jeden Polzahn (10g, 11g) zweifach vorliegen.

3. Rotor nach Anspruch 1 oder 2, **dadurch gekennzeichnet, dass** sich die Becken (105) beiderseits der Polzähne (10g, 11g) befinden.

4. Rotor nach einem der Ansprüche 1 bis 3, **dadurch gekennzeichnet, dass** die Becken (105) unterhalb einer Innenfläche (106) des ringförmigen Abschnitts ausgebildet sind, der eine Platte bildet.

5. Rotor nach einem der Ansprüche 1 bis 4, **dadurch gekennzeichnet, dass** eine Form an der Basis der Magnetlippen (101) in der Nähe einer Schnittlinie zwischen zwei senkrechten Ebenen (E, G) in einem Quadrat (SQ) von 3 mm x 3 mm enthalten ist, das auf der Schnittlinie zentriert ist.

6. Rotor nach einem der Ansprüche 1 bis 4, **dadurch gekennzeichnet, dass** eine Form an der Basis der Magnetlippen (101) in der Nähe einer Schnittlinie zwischen zwei senkrechten Ebenen (E, G) einen Radius (R) zwischen 0,01 und 4 mm aufweist.

7. Rotor nach einem der Ansprüche 1 bis 6, **dadurch gekennzeichnet, dass** über die gesamte Länge der Polzähne (10g, 11g) von den Basen bildenden Abschnitten bis zu Abschnitten, die Spitzen dieser bilden, ein Verhältnis e/E zwischen einer Dicke E der Polzähne (10g, 11g) und einer Dicke e der Magnetlippen (101) zwischen e/R = 0,5 und e/R = 1 beträgt.

## Claims

1. Rotor (1) of a rotary electric machine of the Lundell type, comprising two pole wheels (10, 11), each pole wheel (10, 11) being obtained entirely by forging and comprising a central core (107), a plurality of pole teeth (10g, 11g) distributed evenly at the circumference of the pole wheel (10, 11),
said pole teeth (10g, 11g) extending substantially parallel to a central axis (X) of the pole wheel (10, 11) and comprising magnet-housing grooves (100) and magnet lips (101),
the two pole wheels being mounted on a shaft (13) such that the respective teeth of the pole wheels (10, 11) are nested and form an alternation of south (S) and north (N) magnetic poles,
inter-pole magnets (12) being housed in the spaces between the N and S teeth of the pole wheels (10, 11), the magnet-housing grooves (100) and magnet lips (101) being designed for mounting the inter-pole magnets (12) in the spaces between the N and S teeth and to hold them in position when the rotor is rotating and the effects of centrifugal force are exerted, and a plate-forming annular part (106) extending between the central core (107) and parts forming bases of said pole teeth (10g, 11g), **characterized in that** it comprises a plurality of reservoirs (105) formed in said parts forming bases of the pole teeth.

2. Rotor according to Claim 1, **characterized in that** there are two of said reservoirs (105) for each pole tooth (10g, 11g).

3. Rotor according to Claim 1 or 2, **characterized in that** said reservoirs (105) are situated on either side of said pole teeth (10g, 11g).

4. Rotor according to any one of Claims 1 to 3, **characterized in that** said reservoirs (105) are set below an interior surface (106) of said plate-forming annular part.

5. Rotor according to any one of Claims 1 to 4, **characterized in that** a shape at the base of the magnet lips (101), near an intersection between two perpendicular planes (E, G), is contained in a 3 mm x 3 mm square (SQ) centred on said intersection.

6. Rotor according to any one of Claims 1 to 4, **characterized in that** a shape at the base of the magnet lips (101), near an intersection between two perpendicular planes (E, G), has a radius (R) of between 0.01 and 4 mm.

7. Rotor according to any one of Claims 1 to 6, **characterized in that**, along the entire length of said pole teeth (10g, 11g), from said parts forming bases to parts forming tips thereof, a ratio e/E between a thickness E of said pole teeth (10g, 11g) and a thickness e of said magnet lips (101) is between e/R = 0.5 and e/R = 1.
